# EUROPEAN PATENT SPECIFICATION

(11) **EP 4 408 728 B1**
(45) Date of publication and mention of the grant of the patent: **29.01.2025**
(21) Application number: 22857025.5
(22) Date of filing: 21.09.2022
(51) Int. Cl.: B62K 19/16, B62K 25/28, B29C 70/00

(54) **MOTORCYCLE REAR SWINGARM, MOTORCYCLE WITH SWINGARM AND MANUFACTURING METHOD**
MOTORRAD-HINTERRADSCHWINGE, MOTORRAD MIT SCHWINGE UND HERSTELLUNGSVERFAHREN
BRAS OSCILLANT ARRIÈRE DE MOTOCYCLETTE, MOTOCYCLETTE AVEC BRAS OSCILLANT ET PROCÉDÉ DE FABRICATION

(30) Priority: 30.09.2021 IT 202100025118
(43) Date of publication of application: 07.08.2024
(73) Proprietor: PIAGGIO & C. S.p.A., 56025 Pontedera (PI) (IT)
(72) Inventor: AGUGGIARO, Andrea, 56025 Pontedera (PI) (IT)
(74) Representative: Carangelo, Pierluigi
(86) International application number: PCT/IB2022/058915
(87) International publication number: WO 2023/052911

(56) References cited:
- EP-A1- 3 354 446
- EP-A1- 3 778 173
- DE-A1- 102013 223 298
- JP-A- S55 148 674
- US-A1- 2018 264 756
- US-A1- 2019 100 264
- NIGEL: "Motorcycle swingarm redesigned in carbon composite", 6 December 2011 (2011-12-06), XP093027439, Retrieved from the Internet <URL:https://www.reinforcedplastics.com/content/features/motorcycle-swingarm-redesigned-in-carbon-composite/> [retrieved on 20230228]

## Description

### TECHNOLOGICAL FIELD AND REFERENCE TO RELATED APPLICATION

The present invention relates to a motorcycle component made of a composite material, preferably of carbon fiber. The present invention further relates to a method of manufacturing a motorcycle component made from a material comprising short carbon fibers.

### BACKGROUND ART

The use of composite materials, in particular carbon fiber materials, to manufacture motorcycle components is known from the prior art.

In particular, advantages in terms of lightness and flexibility of the use of composite materials in motorcycle components, especially in rear swingarms, are known. Given the high stresses, deformations, and the need to reduce the inertia and weight of the swingarm, the technology typically utilized, especially in racing, consists in using fiber-reinforced composite materials, referred to as "pre-pregs", formed in an autoclave.

By virtue of the flexibility of this process, the most suitable fibers for each application can be used, such as long carbon fibers which ensure better mechanical properties. The pre-preg autoclave process allows obtaining the best mechanical performance in low-thickness components, but it is not suitable for manufacturing solid inserts or parts which require to be machined with machine tools.

In order to remedy this limitation of long carbon fiber materials, the swingarms for motorcycles comprise a main body having a shell made of carbon fiber, to which metal inserts, e.g., made of aluminum alloy, steel, or titanium, are glued or co-laminated, which are preliminarily milled or turned from billet. Such a swingarm according to the preamble of the claims is shown in the document:
Nigel: "Motorcycle swingarm redesigned in carbon composite"" 6 December 2011 (2011-12-06), XP093027439,Retrieved from the lnternet:URL:https://www.reinforcedplastics.com/content/features/motorcycle-swingarm-redesigned-in-carbon-composite/.

One of the drawbacks of this solution is the weight, because metals have double, triple, or even higher densities than the carbon fiber composite materials.

This problem is particularly felt in the manufacture of swing arm sliders for the rear wheel because the highly rearward position greatly biases the moments of inertia of the vehicle, in particular, the yaw and pitch.

### SUMMARY

The aforementioned drawbacks of the prior art are now solved by a first object of the present invention consisting of a motorcycle assembly comprising a first element and a second element bonded together by a structural adhesive. The first element consists of a first composite material comprising one or more fabrics of carbon fibers linked together by means of a polymeric resin. The second element consists of a second composite material comprising chopped and randomly arranged carbon fibers linked together by means of a polymeric resin. Although this type of assembly appears to be made of several elements, it results in a monolithic body. Indeed, the elements are mutually compatible and compatible, in turn, with the structural adhesive. The result is thus an indissoluble assembly, which couples together a first element, which is lightweight and has optimal mechanical properties, and a second element, which is lighter and more easily machinable than a metal body having the same volume and shape. Furthermore, the material of the second element is more isotropic than the material of the first element, thus being more versatile in terms of use in combination with the latter.

Advantageously, the first element can be a hollow body comprising a shell made of said first composite material. Preferably, said shell can comprise a plurality of layers made of said carbon fiber fabric. The first element thus formed is highly light and mechanically strong.

In particular, the second element can be a solid body entirely made of said second composite material. Since the second element is a solid body and due to the composition and internal architecture thereof, it is machinable with machine tools, such as milling cutters. The second element is much easier to machine than the first element because of the chopped and randomly arranged carbon fibers.

According to the invention, the first element is a motorcycle swingarm. Making a swingarm of a motorcycle from a carbon fiber fabric makes the motorcycle much lighter and better performing.

The second element is constrained to the swingarm and comprises one or more of: a swing arm slider constrained to the swingarm, a motorcycle suspension support constrained to the swingarm, or a bushing constrained to the swingarm. These three types of elements share the common feature of being components which have undercut portions, holes, and require mechanical machining.

Preferably, the chopped carbon fibers of the second composite material can be between 5 and 50 mm, or between 15 mm and 30 mm long. This length of the chopped carbon fibers makes the second element highly strong from the mechanical point of view, also allowing it to be more easily machined with machine tools.

Advantageously, the polymeric resin of said first and/or second composite materials can be an epoxy resin, and said structural adhesive can be an epoxy, acrylic, or urethane adhesive. Thereby, the compatibility of the first element, the second element, and the structural adhesive is maximized.

Preferably, said chopped carbon fibers can comprise offcuts of carbon fiber fabric. Thereby, it is possible to reuse machining scrap from other processes which utilize carbon fiber fabrics, with benefits also in terms of environmental pollution. The term "offcut" means pieces or scraps of carbon fiber fabric.

A second object of the present invention is represented by a motorcycle comprising a swingarm of a rear wheel made of a first composite material comprising a fabric of carbon fibers linked together by means of a polymeric resin, and a pair of swing arm sliders and/or a support of a suspension of the motorcycle and/or a bushing made of a second composite material comprising chopped and randomly arranged carbon fibers linked together by means of a polymeric resin, wherein the sliders and/or the support and/or the bushing are fixed to the swingarm by means of a structural adhesive. A motorcycle thus designed is lighter than a motorcycle comprising a swingarm made of aluminum alloy or made of carbon fiber but with swing arm sliders made of metal.

A third object of the present invention is represented by a manufacturing method for making a motorcycle assembly comprising the steps of:
- providing in a mold a pre-impregnated blank made of a second composite material comprising chopped and randomly arranged carbon fibers linked together by means of a polymeric resin;
- forging said blank in the mold to obtain a forged piece;
- carrying out mechanical machining operations on said forged piece to obtain a second element, wherein the second element is a slider, or a support of a suspension of the motorcycle or a bushing;
- gluing said second element to a first element comprising a fabric of carbon fibers linked together by means of a polymeric resin, wherein the first element is a swingarm.

According to this process, it is possible to obtain elements having a greater thickness than the components obtainable with pre-preg. Furthermore, the elements thus obtained are as easy to machine as the traditional metal components, but with the advantage of being considerably lighter.

Preferably, said method can comprise the preliminary step of curing a carbon fiber fabric with a polymeric resin to obtain said first element and/or a subsequent step of mechanical machining the assembly comprising the first and second elements. This allows obtaining a stronger assembly with optimized geometric tolerances.

These and other advantages will become more apparent from the following description of an embodiment thereof, given by way of an indicative non-limiting example, with reference to the accompanying drawings.

### DESCRIPTION OF THE DRAWINGS

In the drawings:
Figure 1 shows a diagrammatic axonometric view of a motorcycle assembly according to the present invention;
Figures 2A and 2B show a detail view of the end of the motorcycle assembly according to the present invention, in which the first element, the second element, and the structural adhesive are better visible;
Figure 3A shows a side view of a motorcycle assembly according to the present invention;
Figure 3B shows a section view taken along plane A-A of the motorcycle assembly in Figure 3A;
Figure 3C shows a section view taken along plane B-B of the motorcycle assembly in Figure 3B;
Figure 4 shows a diagrammatic view of the motorcycle according to the present invention;
Figures 5A, 5B, and 5C show diagrammatic views of the method according to the present invention.

### DETAILED DESCRIPTION

The following description of one or more embodiments of the invention relates to the accompanying drawings. The same reference numerals in the drawings identify equal or similar elements. The object of the invention is defined by the appended claims. The technical details, structures, or features of the solutions described below can be combined with one another in any manner.

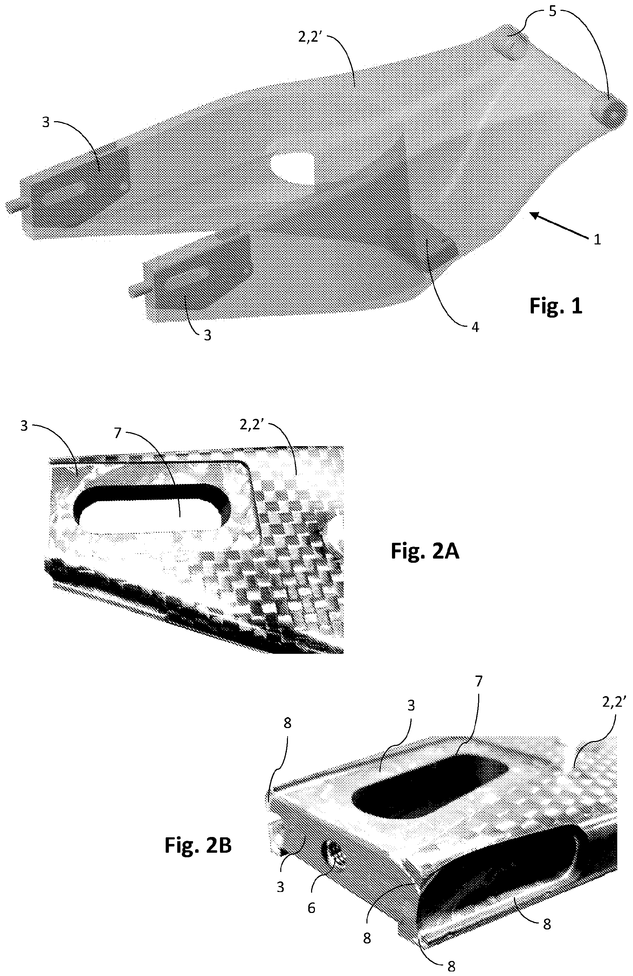

Figure 1 shows an embodiment of a motorcycle assembly with reference numeral 1. Specifically, the assembly 1 comprises a swingarm 2', representing the first element 2, and some second elements 3,4,5 highlighted in a darker color.

In particular, the second elements identified by reference numeral 3 are the rear wheel-holder swing arm sliders, the second element identified by reference numeral 4 is the rear suspension support, and the second elements identified by reference numeral 5 are bearing-holder bushings inserted into the hole 9 of swingarm 2' to accommodate the hinge axle of motorcycle 20. Even if in the example of Figure 1 two sliders 3 and two bushing 5 are provided, in alternative embodiments the assembly can have only one slider 3 and only one bushing 5.

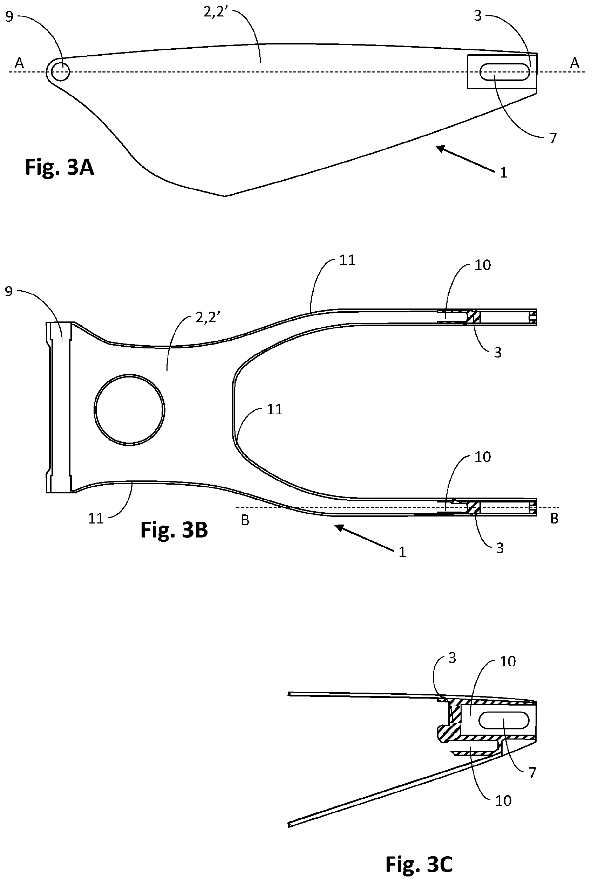

The swingarm 2' is a first element of the hollow type, i.e., comprising an outer shell 11, as better shown in Figures 3A,3B,3C, in which there is no material. On the contrary, the second elements 3,4,5 are full bodies.

The swingarm 2' is made of a carbon fiber fabric pre-impregnated (pre-preg) in a polymeric resin matrix which is cured. In particular, the swingarm 2' is made by arranging a plurality of layers of pre-impregnated carbon fiber fabric, otherwise referred to as skins, on top of one another. These layers are then cured together to form a shell 11 inside an autoclave. The shell 11 can have a thickness typically ranging from 1 to 5 mm. The thus-obtained swingarm 2' is highly lightweight but with optimal mechanical properties. The carbon fibers in the fabric are long continuous fibers, which ensure better mechanical properties than shorter fibers, especially along the extension of the fibers themselves.

One or more of said second elements 3,4,5 are permanently and indissolubly connected to the swingarm 2' thus described.

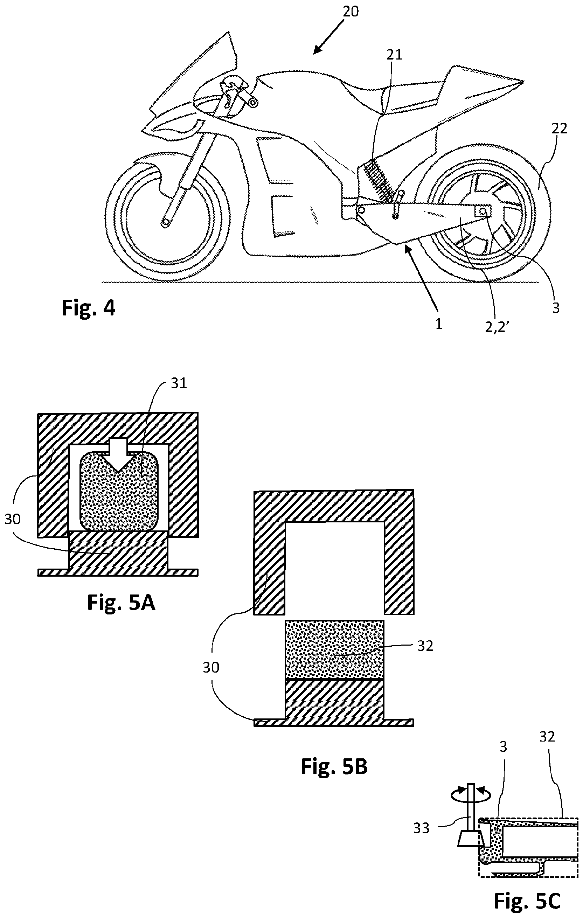

Before connecting the second elements 3,4,5, they are formed and optionally also finished. In particular, as shown in Figure 5A, a block of a second composite material comprising chopped and randomly arranged carbon fibers linked together by means of a polymeric resin, referred to as a pre-impregnated blank 31 for simplicity, is inserted into the component of a mold 30. Preferably, the blank 31 is of the type referred to as SMC (sheet molding compound), but it can also be of the BMC (bulk molding compound) type.

A second portion of the mold 30 cooperates with the first portion of the mold 30 forming a closed chamber, as shown in Figure 5A. The chamber thus created is then pressurized by approaching the two portions of mold 30. Therefore, the blank 31 is first pressurized by the high pressure present in the chamber and then pressed by the upper portion of mold 30, which forges the blank 31 inside the mold 30. The thus-forged component 32, shown in Figure 5B, is ready for subsequent mechanical machining steps.

The forged piece 32 is then machined by means of a machine tool 33 of the chip removal type, e.g., milling, in order to obtain the finished component, i.e., the second elements 3,4,5, as shown in Figure 5C.

The forging occurs at a pressure between 10 and 150 bar and at a temperature comprised between 50° C and 200°C.

The second element 3,4,5 thus obtained has breaking properties comparable to those of aluminum alloys but with approximately half the density.

As shown in Figures 2A and 2B, the second element thus obtained, here the swing arm slider 3, is firmly connected to the swingarm 2' by means of a structural adhesive 8.

The usable structural adhesive 8 depends on the polymeric resin of the first and second elements.

In the example shown in Figures 2A and 2B, the resins of the first element 2 and second element 3 are epoxy resins, therefore the structural adhesive 8 is also an epoxy adhesive. Since the substances are mutually compatible, the union of the first element 2 with the second element 3 becomes monolithic and indissoluble.

Alternatively, the resin of the second element 3,4,5 can be a vinyl ester resin or another thermosetting resin.

Alternatively, the resin of the first element 2 can be an epoxy, polyurethane, vinyl ester, or phenolic resin.

Alternatively, the structural adhesive 8 can be an acrylic or urethane adhesive.

As seen in Figures 2A and 2B, the first element 2, i.e., the swingarm 2', has the typical texture of a fabric, as the carbon fiber fabric layers remain visible through the polymeric resin. Conversely, the texture of the second element, i.e., the swing arm slider 3, is marbled, i.e., disorganized, because the chopped carbon fibers do not create an organic pattern as in the case of the first element 2.

The chopped carbon fibers are fibers between 5 mm and 50 mm long, preferably between 15 mm and 30 mm, which are embedded in a polymeric resin matrix. Said chopped fibers have a random arrangement, and for this reason they create the marbled aesthetic effect.

The disorganized arrangement and short length of the carbon fibers of the second element 3,4,5 make it more easily moldable and machinable.

The overall surface finishing of the second element 3,4,5 when extracted from the mold 30 is significantly better than the overall surface finish of the first element obtained from pre-preg. Having an optimized surface finish on the entire surface of the second element allows creating precision mechanical couplings with the first element or other components. Therefore, the time for manufacturing the second element 3,4,5 is shorter than that of the first element 2.

Furthermore, as can be seen in Figures 2A and 2B, the thickness of the solid part of the second element 3,4,5 is greater, at least 4-5 times greater, than that of the solid part of the first element 2. This results from the fact that the starting blank 31 has a considerably greater thickness than that of a conventional pre-preg. The thickness of the solid portion of the second element 3,4,5 can range between 25 mm and 50 mm.

The great thickness and better machinability make the second element 3,4,5 thus devised optimal for manufacturing some motorcycle components, such as the swing arm slider 3 in Figures 2A and 2B.

The swing arm slider 3 has a through-slot 7 in which the rear wheel hub is housed. The swing arm slider 3 further comprises a threaded metal element 6 glued into a cavity of the swing arm slider 3 itself. A bolt for adjusting the position of the wheel hub with respect to the swingarm 2' is connected to this threaded element 6.

As seen in Figures 3B and 3C, the swing arm slider 3 further comprises a plurality of lightening portions 10, i.e., a series of hollowed-out portions (cavities) which further reduce the weight of the component.

As can be seen in Figures 3B and 3C, the shell 11 surrounds the swing arm sliders 3, joining with them at the contact points by means of structural adhesive 8.

The support 4 preferably supports a bracket (not shown), to which the spring suspension 21 of the motorcycle 20 connects. The suspension 21 can pass through a hole in the swingarm 2', shown in Figure 3B. The support 4 preferably comprises protuberances 12 in which threaded elements (not shown) are arranged, which are used to connect said bracket of suspension 21. The support 4 is connected to the swingarm 2' by means of a structural adhesive 8.

The bushings 5 are hollow cylindrical bodies provided with a flange, which are inserted into the swingarm 2' and are connected thereto by means of the structural adhesive 8.

The assembly of swingarm 2', swing arm sliders 3, support 4, and bushings 5, as shown in Figure 1, can be used on a motorcycle 20, as shown in Figure 4.

In conclusion, it is apparent that the invention thus devised is susceptible to several modifications or variations, all falling within the invention; moreover, all details are replaceable by technically equivalent elements, as long as they fall within the appended claims. In practice, the amounts can be varied according to technical needs.

## Claims

1. An assembly (1) for a motorcycle (20) comprising:
- a first element (2) consisting of a first composite material comprising one or more fabrics of carbon fibers linked together by means of a polymeric resin; and
- a second element (3,4,5); wherein:
- the first element (2) is bonded to the second element (3,4,5) by means of a structural adhesive (8);
- the first element (2) is a swingarm (2') and the second element (3,4,5) is constrained to the swingarm (2') and comprises one or more of: a slider (3), a support (4) of a suspension (21) of the motorcycle (20), a bushing (5), **characterized by** the second element (3, 4, 5) consisting of a second composite material comprising chopped and randomly arranged carbon fibers linked together by means of a polymeric resin.

2. Assembly (1) according to claim 1, wherein the first element (2) is a hollow body comprising a shell (11) made of said first composite material, preferably said shell (11) comprising a plurality of layers comprising said carbon fiber fabric.

3. Assembly (1) according to claim 1 or 2, wherein the second element (3,4,5) is a solid body made entirely of said second composite material.

4. Assembly (1) according to any one of the preceding claims, wherein the chopped carbon fibers of the second composite material have a length comprised between 5 mm and 50 mm, preferably between 15 mm and 30 mm.

5. Assembly (1) according to any one of the preceding claims, wherein the polymeric resin of said first and/or second composite material is an epoxy resin.

6. Assembly (1) according to any one of the preceding claims, wherein said structural adhesive (8) is an epoxy, acrylic or urethane adhesive.

7. Assembly (1) according to any one of preceding claims, wherein said chopped carbon fibers comprise offcuts of fabric of carbon fibers.

8. Motorcycle (20) comprising a swingarm (2') of a rear wheel (22) made of a first composite material comprising a fabric of carbon fibers linked together by means of a polymeric resin and a pair of swing arm sliders (3) and/or a support (4) of a suspension (21) of the motorcycle (20) and/or a bushing (5) made of a second composite material, wherein the swing arm slider (3) and/or the support (4) and/or the bushing (5) are fixed to the swingarm (2') by means of a structural adhesive (8), **characterised by** the second composite material comprising chopped and randomly arranged carbon fibers linked together by means of a polymeric resin.

9. Manufacturing method for making an assembly (1) of a motorcycle (20) comprising the steps of:
- providing in a mold (30) a pre-impregnated blank (31) made of a second composite material;
- forging said blank (31) in the mold (30) to obtain a forged piece (32);
- carrying out mechanical workings on said forged piece (32) to obtain a second element (3,4,5), wherein the second element (3,4,5) is a slider (3), or a support (4) of a suspension (21) of the motorcycle (20), or a bushing (5);
- gluing said second element (3,4,5) to a first element (2) consisting of a first composite material J comprising a fabric of carbon fibers linked together by means of a polymeric resin, wherein the first element (2) is a swingarm (2'), **characterised by** the second composite material comprising chopped and randomly arranged carbon fibers linked together by means of a polymeric resin.

10. A manufacturing method according to claim 12, further comprising the preliminary step of curing a carbon fiber fabric with a polymeric resin to realize said first element (2).

11. A manufacturing method according to claim 9 or 10, comprising the subsequent phase of mechanical working an assembly (1) comprising the first and second elements (2,3,4,5).

## Patentansprüche

1. Baugruppe (1) für ein Motorrad (20), umfassend:
- ein erstes Element (2), das aus einem ersten Verbundwerkstoff besteht, der ein oder mehrere Netzgewebe aus Kohlenstofffasern umfasst, die mittels eines Polymerharzes miteinander verbunden sind; und
- ein zweites Element (3,4,5),
wobei:
- das erste Element (2) mittels eines strukturellen Klebstoffs (8) mit an das zweiten Element (3, 4, 5) gebunden ist;
- das erste Element (2) eine Schwinge (2') ist und das zweite Element (3, 4, 5) an der Schwinge (2') befestigt ist und eines oder mehrere der Folgenden umfasst: einen Schieber (3), eine Stütze (4) einer Federung (21) des Motorrads (20), eine Buchse (5), **dadurch gekennzeichnet, dass** das zweite Element (3, 4, 5) aus einem zweiten Verbundwerkstoff besteht, der gehackte und zufällig angeordnete Kohlenstofffasern umfasst, die mittels eines Polymerharzes miteinander verbunden sind.

2. Baugruppe (1) nach Anspruch 1, wobei das erste Element (2) ein Hohlkörper ist, der eine Hülle (11) aus dem ersten Verbundwerkstoff umfasst, wobei die Hülle (11) vorzugsweise eine Vielzahl von Schichten umfasst, die das Kohlenstofffasergewebe umfasst.

3. Baugruppe (1) nach Anspruch 1 oder 2, wobei das zweite Element (3, 4, 5) ein fester Körper ist, der vollständig aus dem zweiten Verbundwerkstoff besteht.

4. Baugruppe (1) nach einem der vorhergehenden Ansprüche, wobei die gehackten Kohlenstofffasern des zweiten Verbundwerkstoffs eine Länge aufweisen, die zwischen 5 mm und 50 mm, vorzugsweise zwischen 15 mm und 30 mm, umfasst.

5. Baugruppe (1) nach einem der vorhergehenden Ansprüche, wobei das Polymerharz des ersten und/oder zweiten Verbundwerkstoffs ein Epoxidharz ist.

6. Baugruppe (1) nach einem der vorhergehenden Ansprüche, wobei der strukturelle Klebstoff (8) ein Epoxid-, Acryl- oder Urethanklebstoff ist.

7. Baugruppe (1) nach einem der vorhergehenden Ansprüche, wobei die zerhackten Kohlenstofffasern Verschnitte von Netzgewebe aus Kohlenstofffasern umfassen.

8. Motorrad (20), umfassend eine Schwinge (2') eines Hinterrads (22) aus einem ersten Verbundwerkstoff, der ein Netzgewebe aus Kohlenstofffasern umfasst, die mittels eines Polymerharzes miteinander verbunden sind, und ein Paar Schwingenschieber (3) und/oder eine Stütze (4) für eine Federung (21) des Motorrads (20) und/oder eine Buchse (5) aus einem zweiten Verbundwerkstoff,
wobei der Schwingenschieber (3) und/oder die Stütze (4) und/oder die Buchse (5) mittels eines strukturellen Klebstoffs (8) an der Schwinge (2') befestigt sind, **dadurch gekennzeichnet, dass** der zweite Verbundwerkstoff gehackte und zufällig angeordnete Kohlenstofffasern umfasst, die mittels eines Polymerharzes miteinander verbunden sind.

9. Verfahren zur Herstellung einer Baugruppe (1) eines Motorrads (20), umfassend die folgenden Schritte:
- Bereitstellen eines vorimprägnierten Rohlings (31) aus einem zweiten Verbundwerkstoff in einer Form (30);
- Schmieden des Rohlings (31) in der Form (30), um ein Schmiedestück (32) zu erhalten;
- Ausführen von mechanischen Bearbeitungen an dem Schmiedestück (32), um ein zweites Element (3, 4, 5) zu erhalten, wobei das zweite Element (3, 4, 5) ein Schieber (3) oder eine Stütze (4) für eine Federung (21) des Motorrads (20) oder eine Buchse (5) ist;
- Verkleben des zweiten Elements (3, 4, 5) mit einem ersten Element (2), das aus einem ersten Verbundwerkstoff besteht, der ein Netzgewebe aus Kohlenstofffasern umfasst, die mittels eines Polymerharzes miteinander verbunden sind, wobei das erste Element (2) eine Schwinge (2') ist, **dadurch gekennzeichnet, dass** der zweite Verbundwerkstoff gehackte und zufällig angeordnete Kohlenstofffasern umfasst, die mittels eines Polymerharzes miteinander verbunden sind.

10. Verfahren nach Anspruch 12, das ferner den einleitenden Schritt des Aushärtens eines Kohlenstofffaser-Netzgewebes mit einem Polymerharz umfasst, um das erste Element (2) zu fertigen.

11. Herstellungsverfahren nach Anspruch 9 oder 10, umfassend die anschließende Phase der mechanischen Bearbeitung einer Baugruppe (1), die die ersten und zweiten Elemente (2, 3, 4, 5) umfasst.

## Revendications

1. Ensemble (1) pour une motocyclette (20) comprenant :
- un premier élément (2) constitué d'une première matière composite comprenant au moins un tissu de fibres de carbone liées entre elles au moyen d'une résine polymère ; et
- un second élément (3, 4, 5) ;
dans lequel :
- le premier élément (2) est lié au second élément (3, 4, 5) au moyen d'un adhésif structurel (8) ;
- le premier élément (2) est un bras (2') oscillant et le second élément (3, 4, 5) est contraint au bras (2') oscillant et comprend un ou plusieurs éléments parmi : un curseur (3), un support (4) d'une suspension (21) de la motocyclette (20), une bague (5), **caractérisé en ce que** le second élément (3, 4, 5) est constitué d'une seconde matière composite comprenant des fibres de carbone hachées et disposées de manière aléatoire, liées entre elles au moyen d'une résine polymère.

2. Ensemble (1) selon la revendication 1, dans lequel le premier élément (2) est un corps creux comprenant une coque (11) réalisée en ladite première matière composite, de préférence ladite coque (11) comprenant une pluralité de couches comprenant ledit tissu en fibres de carbone.

3. Ensemble (1) selon la revendication 1 ou 2, dans lequel le second élément (3, 4, 5) est un corps solide réalisé entièrement en ladite seconde matière composite.

4. Ensemble (1) selon l'une quelconque des revendications précédentes, dans lequel les fibres de carbone hachées de la seconde matière composite présentent une longueur dans la plage comprise entre 5 mm et 50 mm, de préférence entre 15 mm et 30 mm.

5. Ensemble (1) selon l'une quelconque des revendications précédentes, dans lequel la résine polymère de ladite première et/ou seconde matière composite est une résine époxy.

6. Ensemble (1) selon l'une quelconque des revendications précédentes, dans lequel ledit adhésif structurel (8) est un adhésif époxy, acrylique ou uréthane.

7. Ensemble (1) selon l'une quelconque des revendications précédentes, dans lequel lesdites fibres de carbone hachées comprennent des chutes de tissu de fibres de carbone.

8. Motocyclette (20) comprenant un bras (2') oscillant d'une roue arrière (22) réalisé en une première matière composite comprenant un tissu de fibres de carbone liées entre elles au moyen d'une résine polymère et une paire de curseurs (3) de bras oscillant et/ou un support (4) d'une suspension (21) de la motocyclette (20) et/ou une bague (5) réalisée en une seconde matière composite,
dans lequel le curseur (3) de bras oscillant et/ou le support (4) et/ou la bague (5) sont fixés au bras (2') oscillant au moyen d'un adhésif structurel (8), **caractérisé en ce que** la seconde matière composite comprend des fibres de carbone hachées et disposées de manière aléatoire, liées entre elles au moyen d'une résine polymère.

9. Procédé de fabrication d'un ensemble (1) d'une motocyclette (20) comprenant les étapes suivantes :
- la fourniture dans un moule (30) d'une ébauche (31) pré-imprégnée réalisée en une seconde matière composite ;
- la forge de ladite ébauche (31) dans le moule (30) pour obtenir une pièce (32) forgée ;
- la mise en oeuvre des usinages mécaniques sur ladite pièce (32) forgée pour obtenir un second élément (3, 4, 5), dans lequel le second élément (3, 4, 5) est un curseur (3) ou un support (4) d'une suspension (21) de la motocyclette (20) ou une bague (5) ;
- le collage dudit second élément (3, 4, 5) à un premier élément (2) constitué d'une première matière composite comprenant un tissu de fibres de carbone liées entre elles au moyen d'une résine polymère, dans lequel le premier élément (2) est un bras (2') oscillant, **caractérisé en ce que** la seconde matière composite comprend des fibres de carbone hachées et disposées de manière aléatoire, liées entre elles au moyen d'une résine polymère.

10. Procédé de fabrication selon la revendication 12, comprenant en outre l'étape préliminaire de durcissement d'un tissu en fibre de carbone à l'aide d'une résine polymère pour réaliser ledit premier élément (2).

11. Procédé de fabrication selon la revendication 9 ou 10, comprenant la phase ultérieure de travail mécanique d'un ensemble (1) comprenant les premier et second éléments (2, 3, 4, 5).
